# EUROPEAN PATENT SPECIFICATION

(11) **EP 2 784 559 B1**
(45) Date of publication and mention of the grant of the patent: **20.01.2016**
(21) Application number: 14161124.4
(22) Date of filing: 21.03.2014
(51) Int. Cl.: G02B 6/44

(54) **Enclosure with cable seal**
Gehäuse mit Kabelabdichtung
Enceinte avec joint de câble

(30) Priority: 26.03.2013 US 201361805399 P
(43) Date of publication of application: 01.10.2014
(73) Proprietor: Tyco Electronics Raychem BVBA, 3010 Kessel-Lo (BE)
(72) Inventor: Vanhentenrijk, Robert, 3020 Winksele (BE); Wandels, Jean-Pierre, 3473 Waanrode (BE); De Coster, Pieter, 3460 Bekkevoort (BE)
(74) Representative: Grünecker Patent- und Rechtsanwälte PartG mbB

(56) References cited:
- EP-A1- 2 523 286
- WO-A2-03/062890
- WO-A2-2009/148604
- GB-A- 2 425 365
- US-A1- 2008 232 743

## Description

### Background

Various enclosures are known which house telecommunications equipment, including fiber optic splitters, splices, and terminations. Often the enclosures include cable entry and exit ports which are sealed from the environment.

The exterior of each of the cables is sealed to the enclosure. Also, the interior of each of the cables is sealed or blocked to prevent water or other contaminants from entering the enclosure from the interior of the cables.

Improvements are desired in the cable sealing area.

### Summary

An enclosure includes a base, a dome sealed to the base to define an enclosed interior, and an organizer including telecommunications equipment. The base includes one or more ports allowing entry and exit of cables. A transition tube is positioned in the port and includes a cable entry end outside of the port and a cable exit end inside of the enclosure. A heat shrink seal seals an external portion of the port and the cable entry end of the transition tube to the cable. A gel seal is positioned at the opposite end of the transition tube and seals the cables to the transition tube.

In one embodiment, the gel seal is round and is positioned over an end of the transition tube. One or more fasteners secure the gel seal to the transition tube. The gel seal includes a base member, and an opposite end member separated by a gel seal. An activation device moves the base member and the end member toward one another causing the gel seal to seal against the transition tube and around any cables and/or filler rods passing through the gel seal.

In one embodiment, the gel seal includes a plurality of openings, each receiving a cable. The openings are positioned in a circular orientation around a central axis of the gel seal in one embodiment.

In another aspect, an enclosure includes a base, a dome sealed to the base to define an enclosed interior, and an organizer including telecommunications equipment. The base includes one or more ports allowing entry and exit of cables. A seal seals an external portion of the port to the cable. A gel seal is positioned at the opposite end of the port inside of the enclosure and seals the cables relative to the enclosure.

The external seal seals the port to the cable. One example is a heat shrink tube. The internal seal seals the enclosure from any contaminants from the cables. An example is a gel seal with a triggering device. With such a device, other seals like two-part poured epoxy can be avoided.

The present invention also relates to a method of sealing cables to an enclosure including positioning a transition tube in a port of an enclosure, inserting a cable through the transition tube, and applying a heat shrink seal around an exterior of the port, an exterior portion of the transition tube and a portion of the cable. An interior of the transition tube is positioned within an interior of the enclosure. Cables extending into the enclosure are sealed by a gel seal including an activation device wherein the gel seal is mounted at an end portion of the transition tube positioned in the enclosure.

In some embodiments, the cable enters the enclosure as a jacketed cable and is sealed to the heat shrink tube. In other embodiments, a flex tube is utilized to transport the cables to the enclosure and the flex tube is sealed with the heat shrink tube. In other embodiments the transition tube is optional, and the seals can be to top and bottom ends of the ports of the enclosure.

### Brief Description of the Drawings

Figure 1 is a perspective view of an example enclosure including aspects of the present invention;
Figure 2 is an enlarged perspective view of the enclosure of Figure 1;
Figure 3 is a side view of the enclosure of Figure 1;
Figure 4 is a front view of the enclosure of Figure 1;
Figure 5 is a cross-sectional side view of a cable port of the enclosure of Figure 1, shown without any cable and before the heat shrink tube is shrunk;
Figure 6 is a cross-sectional view of a cable port of the enclosure of Figure 5, with a cable having fiber units and showing the heat shrink tube shrunk in position;
Figure 7 is a cross-sectional view of a cable port of the enclosure of Figure 5, with a flex tube having fiber units and showing the heat shrink tube shrunk in position;
Figure 8 is a side view of the transition tube usable in the cable sealing arrangement;
Figure 9 is a cross-sectional side view of the transition tube usable in the cable sealing arrangement;
Figure 10 is an exploded perspective view showing various portions of the enclosure base, and sealing arrangement relative to the cable;
Figure 11 is a further exploded perspective view showing various portions of the enclosure base, and sealing arrangement relative to the cable;
Figure 12 shows an example cable with fiber units and portions of the fiber units with the coating removed to show the fibers;
Figure 13 shows the enclosure, sealing arrangement and example cable, along with some filler plugs.

### Detailed Description

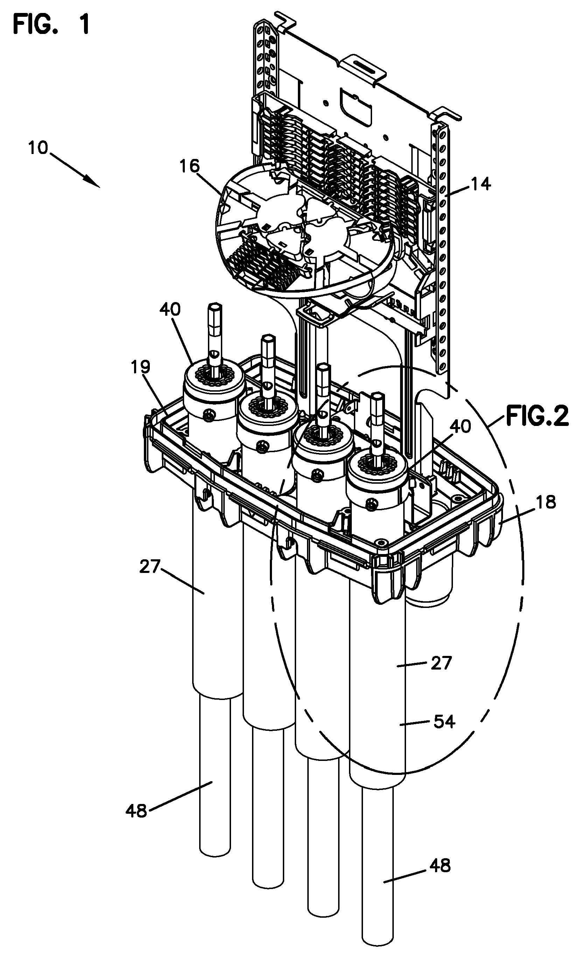

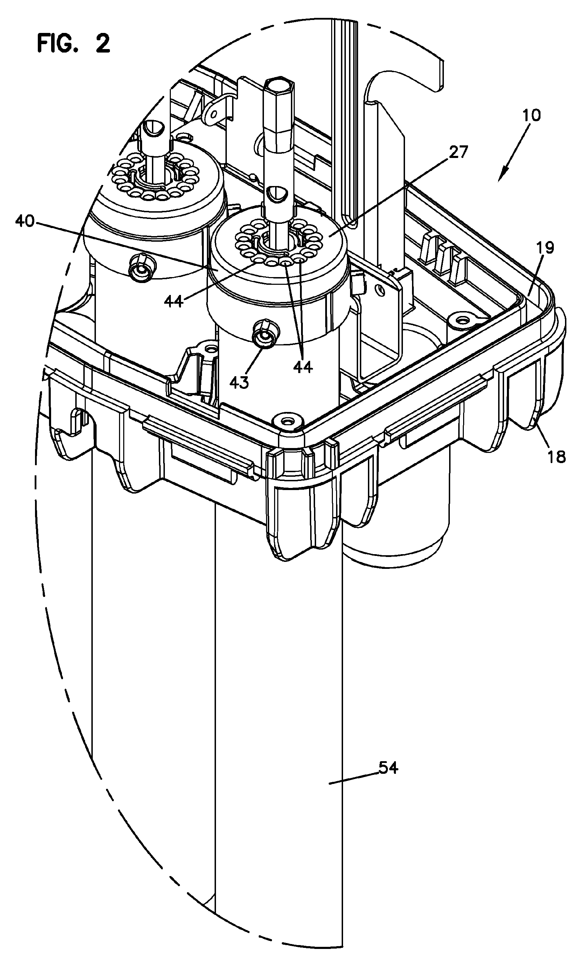

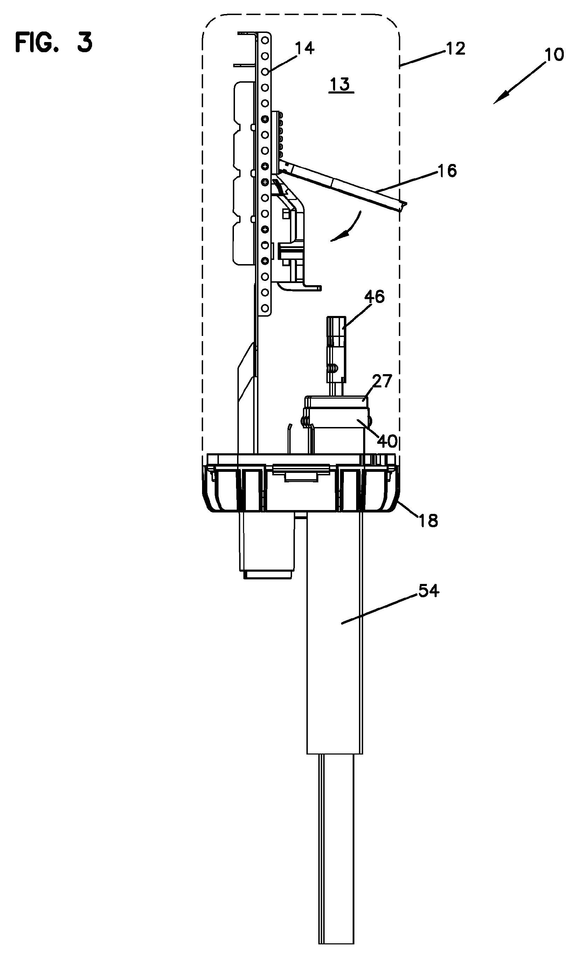

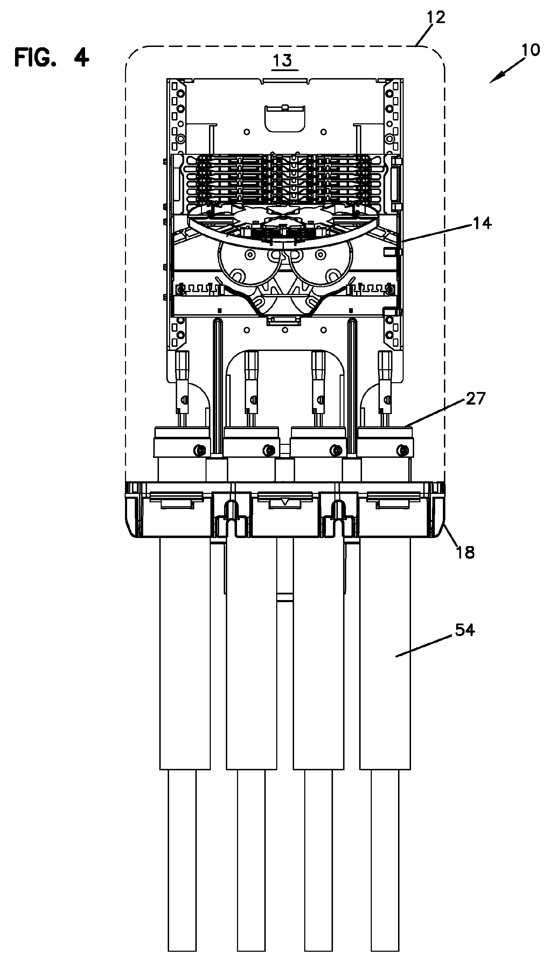

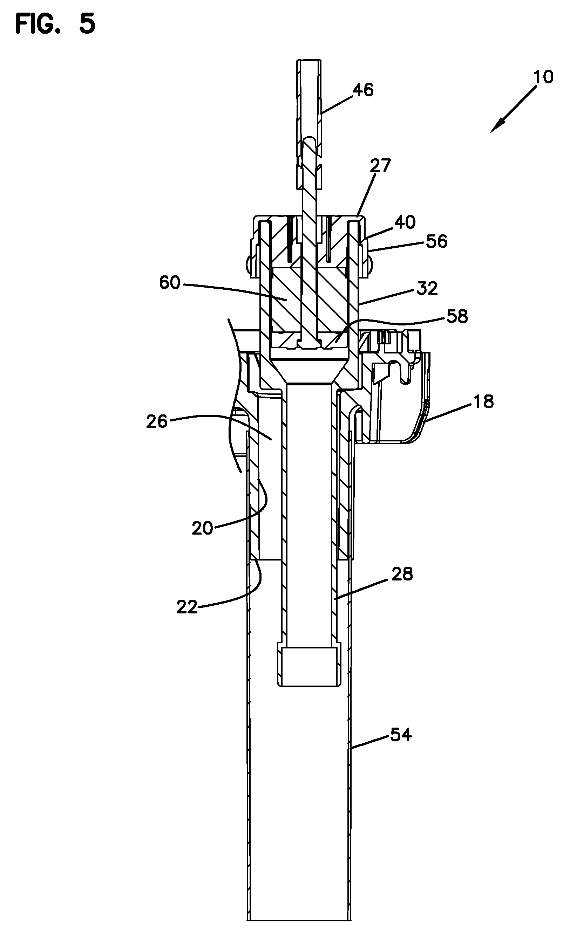

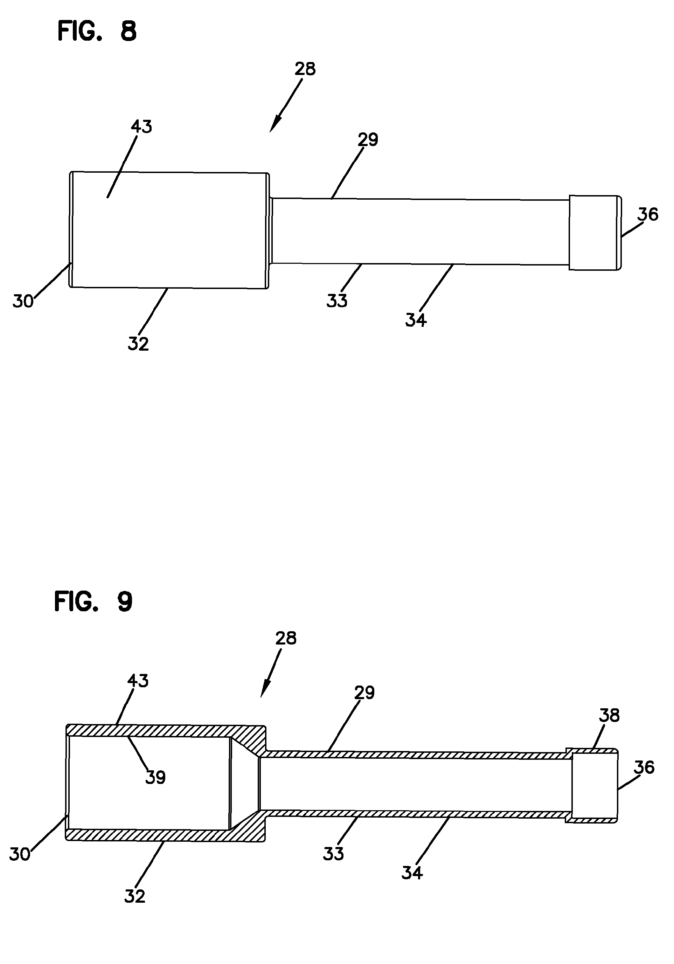

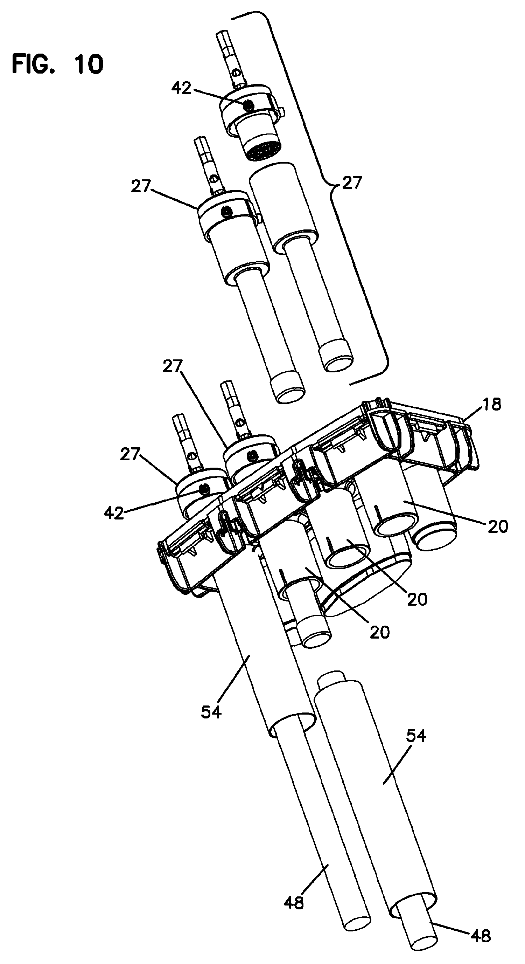

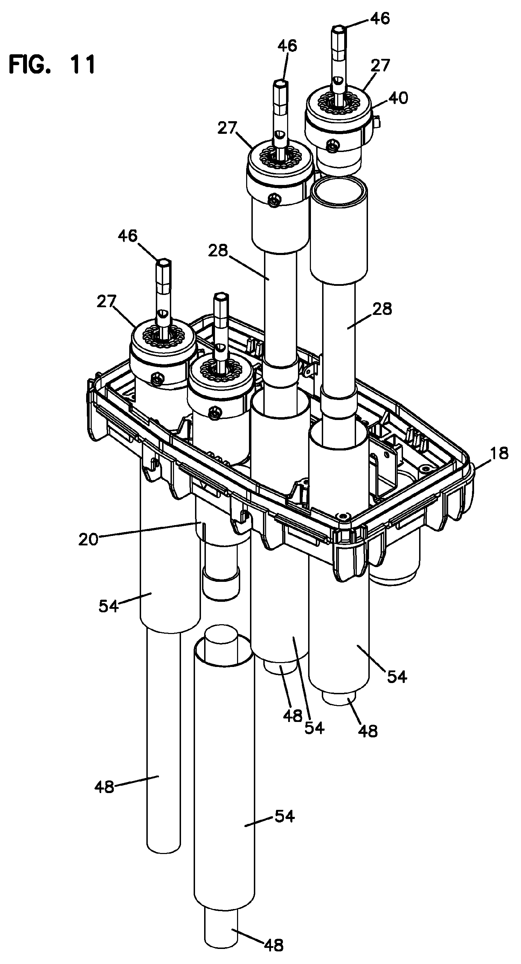

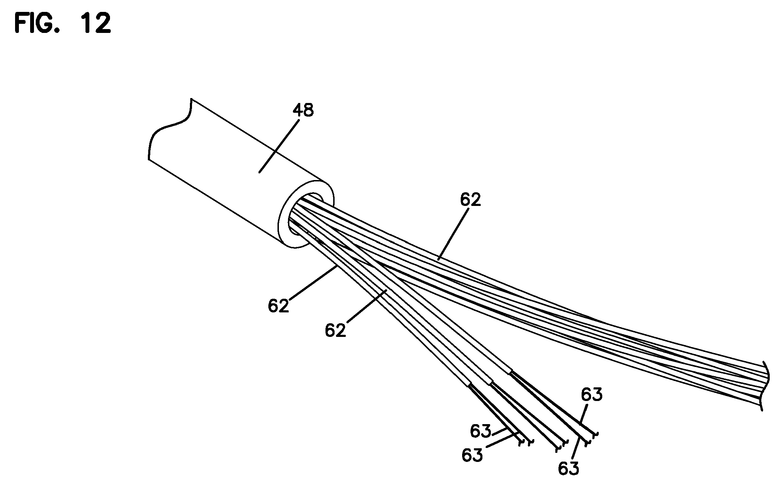

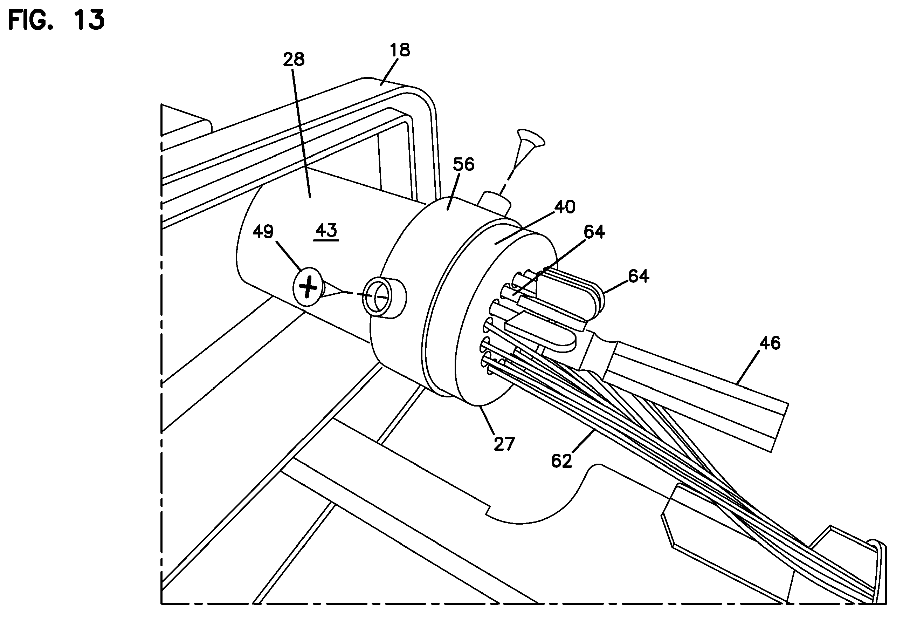

Referring now to Figures 1 through 13, an enclosure or closure 10 is shown. Typically, a dome 12 mounts to a base 18 to define an enclosed interior 13. The dome 12 is typically sealed to base 18, and secured for long term protection of interior 13 at seal 19 with a latch or other device. Interior 13 may also include an organizer 14, or other telecommunications equipment as desired. As shown, organizer 14 includes a pivotally mounted tray 16, such as a splice tray for splicing fiber optic cables. Organizer 14 can include a plurality of trays 16, as desired, in a stack. Trays 16 can define various functions, including splicing or splitting of fiber optic cables. Tray 16 is shown in a slightly flipped up position. Also, organizer 14 can store loop cables as desired.

Entry and exit of cables to enclosure 10 is through or more ports 20. As shown, port 20 is cylindrical. Port 20 includes an outside end 22, and an inside end 24. Port 20 defines a passage 26 defining a cylinder for receipt of the cables entering and exiting enclosure 10. Ports 20 can have other shapes such as oval.

A cable sealing arrangement 27 is provided for sealing cable 48 which enters enclosure 10. Cable 48 is a jacketed cable or tube 50 and in one example includes a plurality of cables in the form of separate cable bundles 62 which are utilized within interior 13 of enclosure 10, such as for connection to other cables through splicing, or for signal splitting or termination and connection to other cables. Cable bundles 62 include a plurality of coated fibers 63, such as 250 micron fibers, in two fiber bundles 62. Other multiples of fibers 63 can be in each bundle.

Cable sealing arrangement 27 includes a transition tube 28 positioned in passage 26 of port 20. Transition tube 28 provides for sealing of the cable 48 to an exterior of enclosure 10. Transition tube 28 also provides structure for sealing of the cable bundles 62 and fibers 63 within cable 48 to enclosure 10.

Transition tube 28 includes a body 29 having an inside end 30 defining an enlarged end portion 32, an intermediate portion 33 including an elongated tube portion 34, and an outside end 36 which includes an enlarged end portion 38.

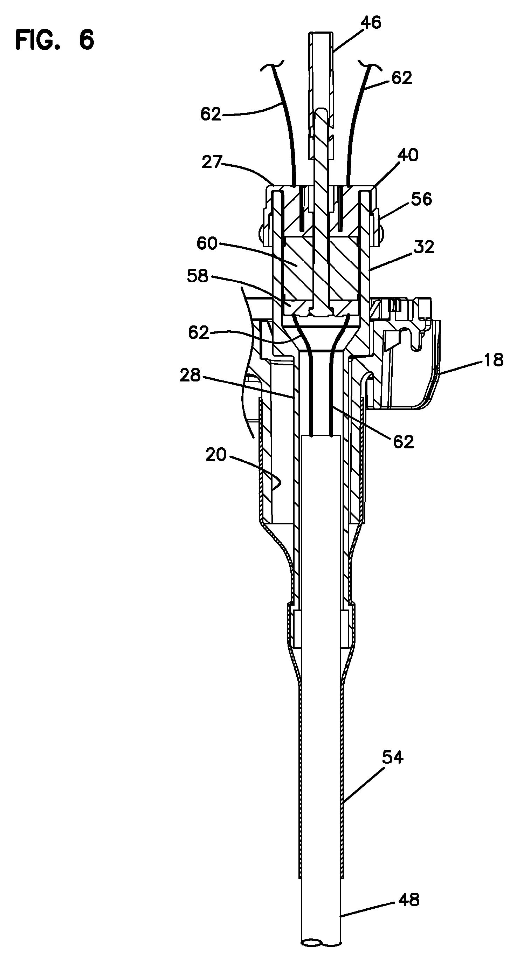

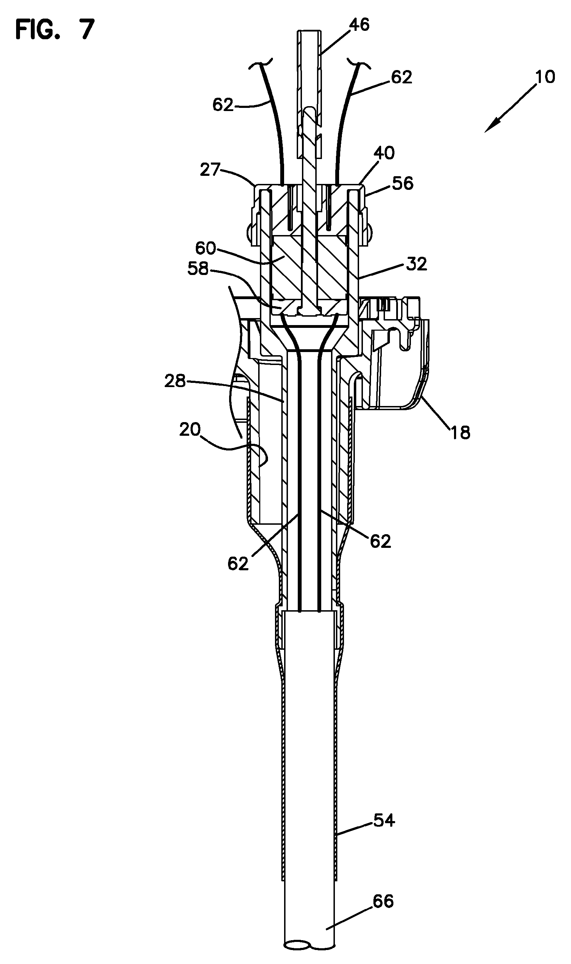

Cable sealing arrangement 27 includes a heat shrink tube 54 which seals around cable 48 and an outside end 22 of port 20 to seal enclosure 10 from the environment (See Figure 6). Heat shrink tube 54 provides fixation of the cable 48 to the enclosure 10. Cable 48 extends to other equipment in an adjacent area or in a distant area. If desired, enlarged end portion 38 can receive an end of a flex tube 66 instead of a cable (See Figure 7). In that case, flex tube 66 can be connected to a cable to improve flexibility of the interconnection between flex tube 66 and the cable for easier manipulation of enclosure 10.

Cable sealing arrangement 27 also includes a gel seal device 40 for sealing the interior of cable 48 and the individual cable bundles 62 from cable 48 which enter enclosure 10 through transition tube 28. Gel seal device 40 mounts to transition tube 28 with one or more fasteners 42, such as screws 49 which engage an exterior surface 43 of enlarged end portion 32. Gel seal device 40 includes a plurality of ports 44 for each receiving a cable bundle 62, or a dummy or filler plug 64. Ports 44 are shown as round ports in the example. An activation device 46 activates the seal of gel seal 40 device. Activation device 46 is threaded. Gel seal device 40 includes a base member or end cap 56 which fits over enlarged end portion 32, and an opposite end member 58 separated by a gel seal 60. Activation device 46 draws base member 56 and end member 58 together to activate gel seal 60 and seal against the cable bundles 62 or the dummy plugs 64 and to seal against an inside surface 39 of enlarged end portion 32. In this manner, port 20 and the cables are sealed from the interior 13 of enclosure 10. This provides blocking of the interior of the cable 48 from the interior 13 of the enclosure 10

Through the use of cable sealing arrangement 27, exterior gel seals can be avoided. Also, through the use of cable sealing arrangement 27, the use of epoxy for sealing around cable bundles 62 and dummy plugs 64 can also be avoided. As noted, cable sealing arrangement 27 includes an interior gel seal which is interior to enclosure 10, in combination with an exterior seal in the form of a heat shrink tube.

One aspect of the invention relates to a cable seal for an enclosure comprising:
a base 18 including a plurality of ports 20;
each port 20 including first and second ends 24, 22;
a transition tube 28 positioned in a passage 26 of the port 20;
the transition tube 28 including a cable entry end 36 positioned outside of the port 20;
a heat shrink seal 54 positioned over the cable entry end 36 of the transition tube 28 and the second end 22 of the port 20;
the transition tube 28 including a cable exit end 30 positioned at the first end 24 of the port 20;
a gel seal 40 positioned at the cable exit end 30 of the transition tube (28);
wherein the gel seal 40 is cylindrically shaped and mounts over the cable exit end 30 of the transition tube 28,
wherein the gel seal 40 includes a plurality of cable ports 44, a gel seal element 60, and an activation device 46 for sealing each of the cable ports 44, and for sealing to the cable exit end 30 of the transition tube 28.

Another aspect of the invention relates to an enclosure 10 comprising:
a dome 12 mounted to a base 18 defining an enclosed interior 13, the enclosed interior 13 including an organizer 14 for holding telecommunications equipment, the base 18 including a plurality of ports 20;
each port 20 including first and second ends 24, 22, the first end 24 disposed at or within the interior 13, the second end 22 disposed outside of the interior;
a transition tube 28 positioned in a passage 26 of the port 20;
the transition tube 28 including a cable entry end 36 positioned outside of the port 20 and outside of the interior 13;
a seal 54 positioned over the cable entry end 36 of the transition tube 28 and the second end 22 of the port 20;
wherein the transition tube 28 includes a cable exit end 30 positioned inside of the interior 13 of the enclosure 10;
a gel seal device 40 positioned at the cable exit end 30 of the transition tube 28;
wherein the gel seal device 40 is cylindrically shaped and mounts over the cable exit end 30 of the transition tube 28;
wherein the gel seal device 40 includes a plurality of cable ports 44, a gel seal 60, and an activation device 46 for simultaneously sealing each of the cable ports 44, and for sealing to the cable exit end 30 of the transition tube 28.

Another aspect relates to an enclosure 10, including a sealing arrangement 27 including an interior gel seal device 40 which is interior to the enclosure 10, and an exterior seal for sealing against a cable 48, 66. The sealing arrangement 27 seals the cable 48, 66 to a transition tube 28 and to a port 20 for the exterior seal. The sealing arrangement 27 seals the individual cables 62, 63 in the interior with the gel seal device 40.

### Parts List

- 10: Enclosure
- 12: Dome
- 13: Interior
- 14: Organizer
- 16: Tray
- 18: Base
- 19: Seal
- 20: Port
- 22: Outside end
- 24: Inside end
- 26: Passage
- 27: Cable sealing arrangement
- 28: Transition tube
- 29: Body
- 30: Inside end
- 32: Enlarged end portion
- 33: Intermediate portion
- 34: Tube portion
- 36: Outside end
- 38: Enlarged end portion
- 39: Inside surface
- 40: Gel seal device
- 42: Fastener
- 43: Exterior surface
- 44: Ports
- 46: Activation device
- 48: Cable
- 49: Screws
- 50: Tube
- 54: Heat shrink tube
- 56: Base member
- 58: End member
- 60: Gel seal
- 62: Cable bundle
- 63: Fibers
- 64: Dummy plug
- 66: Flex tube

## Claims

1. An enclosure (10) comprising:
a dome (12) mounted to a base (18) defining an enclosed interior (13), the enclosed interior (13) including an organizer (14) for holding telecommunications equipment, the base (18) including a plurality of ports (20);
each port (20) including first and second ends (24, 22), the first end (24) disposed at or within the interior (13), the second end (22) disposed outside of the interior;
**characterized in that** the improvement comprises:
a transition tube (28) positioned in a passage (26) of the port (20);
the transition tube (28) including a cable entry end (36) positioned outside of the port (20) and outside of the interior (13);
a heat shrink seal (54) positioned over the cable entry end (36) of the transition tube (28) and the second end (22) of the port (20);
wherein the transition tube (28) includes a cable exit end (30) positioned inside of the interior (13) of the enclosure (10);
a gel seal device (40) positioned at the cable exit end (30) of the transition tube (28);
wherein the gel seal device (40) is cylindrically shaped and mounts over the cable exit end (30) of the transition tube (28);
wherein the gel seal device (40) includes a plurality of cable ports (44), a gel seal (60), and an activation device (46) for simultaneously sealing each of the cable ports (44), and for sealing to the cable exit end (30) of the transition tube (28).

2. The enclosure (10) of claim 1, wherein the transition tube (28) includes an enlarged end portion (32) at the cable exit end (30).

3. The enclosure (10) of any claims 1 and 2, wherein the transition tube (28) includes an enlarged end portion (38) at the cable entrance end (36).

4. The enclosure (10) of any of claims 1-3, wherein the gel seal device (40) includes the activation device (46) at the exit end (30) of the transition tube (28) projecting into the interior (13) of the dome (12).

5. The enclosure (10) of any of claims 1-4, wherein the gel seal device (40) mounts with fasteners (42) to the transition tube (28).

6. The enclosure (10) of any of claims 1-5, further comprising a cable (48) entering the transition tube (28).

7. The enclosure (10) of any of claims 1-5, further comprising a flex tube (66) entering the transition tube (28).

8. A method of sealing a cable or cables (48, 62, 63, 66) to an enclosure (10) comprising:
positioning a transition tube (28) in a port (20) of an enclosure (10);
inserting a cable (48, 62, 63, 66) through the transition tube (28);
applying seals including a heat shrink seal (54) around an exterior of the port (20), an exterior portion of the transition tube (28) and a portion of the cable (48, 62, 63, 66), wherein an interior of the transition tube (28) is positioned within an interior of the enclosure (10), and the cable or cables extending into the enclosure (10) are sealed by a gel seal (60) including an activation device (46) wherein the gel seal (60) is mounted at an end portion of the transition tube (28) positioned in the enclosure (10).

## Patentansprüche

1. Gehäuse (10), das umfasst:
eine Kuppel (12), die an einer Basis (18) montiert ist und einen umschlossenen Innenraum (13) definiert, wobei der umschlossene Innenraum (13) eine Organisationseinrichtung (14) zum Halten von Telekommunikationseinrichtungen (18) enthält und die Basis eine Vielzahl von Anschlüssen (20) umfasst,
wobei jeder Anschluss (20) erste und zweite Enden (24, 22) aufweist, wobei das erste Ende (24) an oder innerhalb des Innenraums (13) angeordnet ist und das zweite Ende (22) außerhalb des Innenraums angeordnet ist,
**dadurch gekennzeichnet, dass** die Verbesserung umfasst:
ein Übergangsrohr (28), das in einem Durchgang (26) des Anschlusses (20) positioniert ist,
wobei das Übergangsrohr (28) ein Kabeleintrittsende (36) umfasst, das außerhalb des Anschlusses (20) und außerhalb des Innenraums (13) angeordnet ist,
eine Wärmeschrumpfdichtung (54), die über dem Kabeleintrittsende (36) des Übergangsrohrs (28) und dem zweiten Ende (22) des Anschlusses (20) angeordnet ist,
wobei das Übergangsrohr (28) ein Kabelaustrittsende (30) umfasst, das innerhalb des Innenraums (13) des Gehäuses (10) angeordnet ist,
eine Geldichtungseinrichtung (40), die an dem Kabelaustrittsende (30) des Übergangrohrs (28) positioniert ist,
wobei die Geldichtungeinrichtung (40) zylindrisch geformt ist und über dem Kabelaustrittsende (30) des Übergangsrohrs (28) montiert ist,
wobei die Geldichtungseinrichtung (40) eine Vielzahl von Kabelanschlüssen (44), eine Geldichtung (60) und eine Aktivierungseinrichtung (46) zum gleichzeitigen Abdichten jedes der Kabelanschlüsse (44) und zum Abdichten an dem Kabelaustrittsende (30) des Übergangsrohrs (28) umfasst.

2. Gehäuse (10) nach Anspruch 1, wobei das Übergangsrohr (28) einen vergrößerten Endteil (32) an dem Kabelaustrittsende (30) umfasst.

3. Gehäuse (10) nach Anspruch 1 oder 2, wobei das Übergangsrohr (28) einen vergrößerten Endteil (38) an dem Kabeleintrittsende (36) umfasst.

4. Gehäuse (10) nach einem der Ansprüche 1-3, wobei die Geldichtungseinrichtung (40) die Aktivierungseinrichtung (46) an dem Austrittsende (30) des Übergangsrohrs (28) umfasst, die in den Innenraum (13) der Kuppel (12) vorsteht.

5. Gehäuse (10) nach einem der Ansprüche 1-4, wobei die Geldichtungseinrichtung (40) mittels Befestigungselementen (42) an dem Übergangsrohr (28) montiert ist.

6. Gehäuse (10) nach einem der Ansprüche 1-5, das weiterhin ein Kabel (48) umfasst, das sich in das Übergangsrohr (28) erstreckt.

7. Gehäuse (10) nach einem der Ansprüche 1-5, das weiterhin ein flexibles Rohr (66) umfasst, das sich in das Übergangsrohr (28) erstreckt.

8. Verfahren zum Abdichten eines oder mehrerer Kabel (48, 62, 63, 66) an einem Gehäuse (10), umfassend:
Positionieren eines Übergangsrohrs (28) in einem Anschluss (20) eines Gehäuses (10),
Einführen eines Kabels (48, 62, 63, 66) durch das Übergangsrohr (28),
Anbringen von Dichtungen einschließlich einer Wärmeschrumpfdichtung (54) um einen äußeren Teil des Anschlusses (20), einen äußeren Teil des Übergangsrohrs (28) und einen Teil des Kabels (48, 62, 63, 66) herum, wobei ein Innenraum des Übergangsrohrs (28) in einem Innenraum des Gehäuses (10) positioniert ist und das oder die Kabel, die sich in das Gehäuse (10) erstrecken, durch eine Geldichtung (60) einschließlich einer Aktivierungseinrichtung (46) abgedichtet werden, wobei die Geldichtung (60) an einem Endteil des in dem Gehäuse (10) positionierten Übergangsrohrs (28) montiert wird.

## Revendications

1. Enceinte (10) comprenant :
un dôme (12) monté sur une base (18) définissant une partie intérieure enfermée (13), la partie intérieure enfermée (13) incluant un dispositif d'organisation (14) destiné à contenir un équipement de télécommunications, la base (18) incluant une pluralité d'accès (20) ;
chaque accès (20) incluant des première et seconde extrémités (24, 22), la première extrémité (24) étant disposée au niveau de ou dans la partie intérieure (13), la seconde extrémité (22) étant disposée à l'extérieur de la partie intérieure ;
**caractérisée en ce que** l'amélioration comprend :
un tube de transition (28) positionné dans un passage (26) de l'accès (20) ;
le tube de transition (28) incluant une extrémité d'entrée de câble (36) positionnée à l'extérieur de l'accès (20) et à l'extérieur de la partie intérieure (13) ;
un joint thermorétractable (54) positionné au-dessus de l'extrémité d'entrée de câble (36) du tube de transition (28) et de la seconde extrémité (22) de l'accès (20) ;
dans lequel le tube de transition (28) comporte une extrémité de sortie de câble (30) positionnée dans la partie intérieure (13) de l'enceinte (10) ;
un dispositif de joint à gel (40) positionné au niveau de l'extrémité de sortie du câble (30) du tube de transition (28) ;
dans lequel le dispositif de joint à gel (40) est conformé de manière cylindrique et est monté au-dessus de l'extrémité de sortie du câble (30) du tube de transition (28) ;
dans lequel le dispositif de joint à gel (40) comporte une pluralité d'accès de câble (44), un joint à gel (60) et un dispositif d'activation (46) pour sceller simultanément chacun des accès de câble (44), et sceller l'extrémité de sortie de câble (30) du tube de transition (28).

2. Enceinte (10) selon la revendication 1, dans laquelle le tube de transition (28) comporte une partie d'extrémité agrandie (32) à l'extrémité de sortie de câble (30).

3. Enceinte (10) selon l'une quelconque des revendications 1 et 2, dans laquelle le tube de transition (28) comporte une partie d'extrémité agrandie (38) à l'extrémité d'entrée de câble (36).

4. Enceinte (10) selon l'une quelconque des revendications 1 à 3, dans laquelle le dispositif de joint à gel (40) comporte le dispositif d'activation (46) à l'extrémité de sortie (30) du tube de transition (28) se projetant dans la partie intérieure (13) du dôme (12).

5. Enceinte (10) selon l'une quelconque des revendications 1 à 4, dans laquelle le dispositif de joint à gel (40) est monté avec des fixations (42) sur le tube de transition (28).

6. Enceinte (10) selon l'une quelconque des revendications 1 à 5, comprenant en outre un câble (48) pénétrant dans le tube de transition (28).

7. Enceinte (10) selon l'une quelconque des revendications 1 à 5, comprenant en outre un tube souple (66) pénétrant dans le tube de transition (28).

8. Procédé de scellement d'un ou plusieurs câbles (48, 62, 63, 66) sur une enceinte (10) comprenant :
le positionnement d'un tube de transition (28) dans un accès (20) de l'enceinte (10) ;
l'insertion d'un câble (48, 62, 63, 66) à travers le tube de transition (28) ;
l'application de joints incluant un joint thermorétractable (54) autour de l'extérieur de l'accès (20), la partie extérieure du tube de transition (28) et une partie du câble (48, 62, 63, 66), dans lequel la partie intérieure du tube de transition (28) est positionnée dans la partie intérieure de l'enceinte (10), et le ou les câbles s'étendant dans l'enceinte (10) sont scellés par un joint à gel (60) incluant un dispositif d'activation (46), dans lequel le joint à gel (60) est monté à une partie d'extrémité du tube de transition (28) positionné dans l'enceinte (10).
